# EUROPÄISCHE PATENTSCHRIFT

(11) **EP 0 761 180 B1**
(45) Veröffentlichungstag und Bekanntmachung des Hinweises auf die Patenterteilung: **07.11.2001**
(21) Anmeldenummer: 96109909.0
(22) Anmeldetag: 20.06.1996
(51) Int. Cl.: A61C 13/30

(54) **Wurzelstift für einen künstlichen Zahnaufbau**
Root pin for artificial tooth construction
Pivot radiculaire pour la construction d'une dent artificielle

(30) Priorität: 06.09.1995 DE 29514267 U; 18.09.1995 DE 19534598
(43) Veröffentlichungstag der Anmeldung: 12.03.1997
(73) Patentinhaber: Degussa-Hüls Aktiengesellschaft, 60287 Frankfurt am Main (DE)
(72) Erfinder: Adam, Robert, 63517 Rodenbach (DE); Kühner, Matthias, Dr., 63755 Alzenau (DE); Rosin, Michael, Dr., 63755 Alzenau (DE); Winter, Klaus, 63128 Dietzenbach (DE); Wolf, Peter, 63517 Rodenbach (DE); Birkholz, Ulrich, 63457 Hanau (DE)

(56) Entgegenhaltungen:
- EP-A- 0 026 246
- CH-A- 562 605
- DE-A- 2 018 330
- DE-A- 4 238 383
- DE-C- 833 837
- DE-C- 845 243

## Beschreibung

Die Erfindung betrifft einen Wurzelstift, bestehend aus einem Kopf für den künstlichen Zahnaufbau und einem außen mit einem Schraubgewinde versehenen, im Querschnitt kreisrunden, zylindrischen oder konischen, in die präparierte Zahnwurzel eindrehbaren Verankerungsteil, bekannt aus der DE-A-42 38 383.

Wurzelstifte finden insbesondere dann Verwendung, wenn infolge kariöser Zerstörung von einem Zahn nur noch der Wurzelstumpf übriggeblieben ist, an dem eine Zahnkrone keinen genügenden Halt mehr findet. In solchen Fällen wird in den präparierten Wurzelstumpf ein metallischer Wurzelstift eingesetzt, an dessen Kopfteil die Zahnkrone aufgebaut wird.

Solche Wurzelstifte sind beispielsweise in der DE - 35 40 188 C2 und in der EP 0 043 343 B1 beschrieben. Sie bestehen aus einem länglichen, metallischen Verankerungsteil, das über die gesamte Länge außen ein Schraubgewinde trägt und einem Kopfteil, auf das die Zahnkrone aufgebaut wird. Das Verankerungsteil ist rund und konisch oder zylindrisch ausgebildet oder auch abschnittsweise konisch und zylindrisch. Es wird vom Zahnarzt in den prärarierten Zahnwurzelkanal eingedreht, wobei vermieden werden muß, daß der Zahnwurzelkanal beim Eindrehen gesprengt wird. Weiterhin ist es von Vorteil, wenn das Verankerungsteil auch wieder gelöst werden kann.

In der EP 0 043 343 ist ein Verankerungsteil beschrieben, das über die gesamte Länge ein Schraubgewinde aufweist, das einen Steigerungswinkel von 70 bis 80° bezüglich der Längsachse des Teils besitzt. Dieses Gewinde hat den Nachteil, daß der Zahnarzt beim Eindrehen des Verankerungsteils in die präparierte Zahnwurzel relativ viele Umdrehungen des Teils vollführen muß, was bei den beengten Arbeitsverhältnissen im Mund des Patienten beschwerlich ist. Außerdem besteht die Gefahr, daß insbesondere im unteren Teil des Wurzelkanals dieser durch das Schraubgewinde beim Festdrehen gesprengt wird.

Es war daher Aufgabe der vorliegenden Erfindung, einen Wurzelstift zu entwickeln, bestehend aus einem Kopf für den künstlichen Zahnaufbau und einem außen mit einem Schraubgewinde versehenen, im Querschnitt kreisrunden, zylindrischen oder konischen, in die präparierte Zahnwurzel eindrehbaren Verankerungsteil, bei dem das Verankerungsteil unter größtmöglicher Schonung des Zahnwurzelkanals mit möglichst wenigen Umdrehungen sicher befestigt werden kann.

Diese Aufgabe wird erfindungsgemäß dadurch gelöst, daß das Schraubgewinde sich nur im oberen, dem Kopf zugewandten Abschnitt des Verankerungsteils befindet und mehrgängig ausgebildet ist.

Vorzugsweise erstreckt sich der gewindefreie Abschnitt des Verankerungsteils etwa über ein Drittel der Gesamtlänge.
Dadurch ist gewährleistet, daß in diesem Bereich des Zahnwurzelkanals, der besonders dünnwandig ist, keine Spannungen durch Anschlagen der Gewinderillen aufgebaut werden können.

Als vorteilhaft hat es sich erwiesen, wenn das Schraubgewinde zwei- bis viergängig ausgebildet ist. Durch die mehrfache Ganghöhe gegenüber einem normalen, eingängigen Gewinde ist das Festdrehen des Verankerungsteils durch den Zahnarzt schon mit wenigen Umdrehungen des Teils gewährleistet.

Bewährt hat es sich, wenn das Schraubgewinde auf dem oberen, dem Kopf zugewandten Abschnitt des Verankerungsteils aus drei bis fünf Gewindegängen besteht.

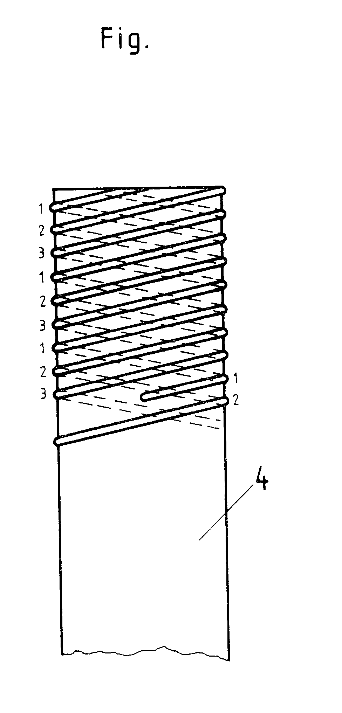

Die Abbildung zeigt schematisch eine beispielhafte Ausführungsform des erfindungsgemäßen Verankerungsteils im Längsschnitt. Das Verankerungsteil (4) ist mit einem dreigängigen Gewinde versehen, wobei die einzelnen Gewindegänge (1,2,3) auf dem kreisförmigen Querschnitt um jeweils 120° versetzt angeordnet sind.

## Patentansprüche

1. Wurzelstift, bestehend aus einem Kopf für den künstlichen Zahnaufbau und einem außen mit einem Schraubgewinde versehenen, im Querschnitt kreisrunden, zylindrischen oder konischen, in die präparierte Zahnwurzel eindrehbares Verankerungsteil,
**dadurch gekennzeichnet,**
**daß** das Schraubgewinde (1,2,3) sich nur im oberen, dem Kopf zugewandten Abschnitt des Verankerungsteils (4) befindet und mehrgängig ausgebildet ist, wobei der gewindefreie Abschnitt des Verankerungsteils (4) etwa ein Drittel der Gesamtlänge beträgt.

2. Wurzelstift nach Anspruch 1,
**dadurch gekennzeichnet,**
**daß** das Schraubgewinde auf dem oberen, dem Kopf zugewandten Abschnitt des Verankerungsteils (4) aus 3 bis 5 Gewindegängen besteht.

## Claims

1. A root pin, comprising a head for artificial tooth construction and an anchoring element, which is provided on its outside with a screw thread, has a circular, cylindrical or conical cross section and can be screwed into the prepared tooth root,
**characterised in that**
the screw thread (1, 2, 3) is only disposed in the upper section of the anchoring element (4) facing the head and has a multi-course construction, the thread-free section of the anchoring element (4) measuring approximately one third of the overall length.

2. A root pin according to claim 1,
**characterised in that**
the screw thread in the upper section of the anchoring element (4) facing the head comprises 3 to 5 thread courses.

## Revendications

1. Pivot radiculaire composé d'une tête pour la construction de dent artificielle et d'un filetage extérieur, avec une section circulaire, cylindrique ou conique pour la pièce d'ancrage qui se visse dans la racine de la dent, préparée,
**caractérisé en ce que**
le filetage (1, 2, 3) ne se trouve que dans le segment supérieur de la pièce d'ancrage (4), tourné vers la tête et comporte plusieurs filets,
le segment sans filet de la pièce d'ancrage (4) représentant sensiblement un tiers de la longueur totale.

2. Pivot radiculaire selon la revendication 1,
**caractérisé en ce que**
le filetage du segment supérieur de la pièce d'ancrage (4), tourné vers la tête de la pièce, comprend entre trois et cinq filets.
